# EUROPÄISCHE PATENTSCHRIFT

(11) **EP 1 564 072 B1**
(45) Veröffentlichungstag und Bekanntmachung des Hinweises auf die Patenterteilung: **05.08.2009**
(21) Anmeldenummer: 05002092.4
(22) Anmeldetag: 02.02.2005
(51) Int. Cl.: B60R 5/04, B60P 1/00

(54) **Ausziehbarer Ladeboden für ein Fahrzeug**
Extendable loading platform for a vehicle
Plateau de chargement extensible pour un véhicule

(30) Priorität: 12.02.2004 DE 102004007138
(43) Veröffentlichungstag der Anmeldung: 17.08.2005
(73) Patentinhaber: AB SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97424 Schweinfurt (DE); Kemmer, Martin, 97525 Schwebheim (DE); Mayer, Uwe, 97702 Münnerstadt (DE); Rembold, Patrick, 97508 Grettstadt (DE)
(74) Vertreter: Kohl, Thomas

(56) Entgegenhaltungen:
- EP-A- 1 332 918
- WO-A-03/022633
- DE-A1- 10 210 884
- US-A- 5 944 371

## Beschreibung

Die Erfindung betrifft einen ausziehbaren Ladeboden für ein Fahrzeug, insbesondere für einen Personenkraftwagen, der in einem Lade- oder Kofferraum angeordnet werden kann und der, vorzugsweise in Fahrtrichtung des Fahrzeugs, auf mindestens einem Linearlager verschiebbar angeordnet ist, wobei der Ladeboden aus mindestens zwei Teilen besteht, die relativ zueinander klappbar ausgebildet sind.

Insbesondere bei Personenkraftwagen, die als Kombi, als Van oder als Geländewagen ausgeführt sind, besteht häufig der Bedarf, relativ schwere und sperrige Gegenstände zu transportieren. Das Ein- und Ausladen dieser Gegenstände gestaltet sich bei entsprechendem Gewicht dieser Gegenstände zumeist sehr schwierig, weil der Gegenstand über die Ladekante in den Lade- bzw. Kofferraum des Personenkraftwagens gehoben werden muss. Daher sind Ladeböden der eingangs genannten Art bekannt, die auf zumeist zwei Linearführungen bzw. Linearlagern gelagert sind und dadurch - in Fahrtrichtung des Fahrzeugs betrachtet - relativ zum Lade- bzw. Kofferraum verschiebbar sind. Zum Beladen des Lade- bzw. Kofferraums mit einem schweren Gegenstand wird der Ladeboden entgegen der Fahrtrichtung aus dem Lade- bzw. Kofferraum herausgezogen, so dass - mangels Störkanten - ein einfaches Heraufheben des einzuladenden Gegenstandes auf den Ladeboden erfolgen kann, was einfacher ist als den Gegenstand ins Innere des Personenkraftwagens zu heben. Ist der Gegenstand auf dem Ladeboden abgelegt, wird er auf diesem ins Innere des Lade- bzw. Kofferraums mittels der Linearführungen hineingeschoben; das Entladen erfolgt in entsprechend umgekehrter Reihenfolge.

Wenngleich durch das Vorsehen eines Ladebodens eine besonders einfache Möglichkeit geschaffen wird, schwere und sperrige Gegenstände in das Fahrzeug zu laden, ist dann der Ladeboden nachteilhaft, wenn er nicht benötigt wird und große Gegenstände im Lade- bzw. Kofferraum des Fahrzeugs transportiert werden sollen. In diesem Falle werden durch den Ladeboden einige Zentimeter Höhe benötigt, was die effektive Ladehöhe im Lade- bzw. Kofferraum verringert.

Ein gattungsgemäßer Ladeboden ist aus der DE 102 10 884 A1 bekannt. Der Ladeboden besteht hier aus zwei relativ zueinander klappbaren Teilen, wobei die Klappachse quer zur Fahrtrichtung des Fahrzeugs angeordnet ist. Die EP 1 332 918 A2 zeigt ebenfalls einen aus mehreren Teilen bestehenden Ladeboden, wobei die Teile relativ zueinander klappbar sind. Auch hier ist die Klappachse horizontal und quer zur Fahrtrichtung ausgerichtet. Gemäß einer speziellen Ausgestaltung ist bei dieser Lösung weiterhin vorgesehen, dass ein Teil des Ladebodens um eine vertikal ausgerichtete Achse geklappt werden kann, um eine hintere Begrenzung des zur Verfügung stehenden Laderaums herzustellen. Die WO 03/022633 A2 zeigt ebenfalls einen aus dem Kofferraum eines Fahrzeugs ausziehbaren Ladeboden, wobei dieser eine Anzahl Fächer aufweist, die mit klappbaren Deckeln versehen sind.

Der Erfindung liegt die **Aufgabe** zugrunde, ein Fahrzeug mit einem ausziehbaren Ladeboden der eingangs genannten Art so weiterzubilden, dass der Ladeboden bei Bedarf zwar zur Verfügung steht, dass er jedoch bei Nichtbenutzung keine Beschränkung der Ladekapazität des Lade- bzw. Kofferraums darstellt und insbesondere die verfügbare Ladehöhe nicht beschränkt.

Die **Lösung** dieser Aufgabe durch die Erfindung ist **dadurch gekennzeichnet, dass** die Klappachse zwischen den Teilen in Verschieberichtung des Ladebodens weist, wobei zumindest zwei Teile des Ladebodens in zusammengeklapptem Zustand in eine vertikal ausgerichtete Position geklappt werden können.

Eine weitere Fortbildung sieht vor, dass zumindest zwei Teile des Ladebodens mit einem Scharnier verbunden sind.

Damit in heruntergeklapptem Zustand zwecks Benutzung des Ladebodens dieser eine stabile Ladefläche darstellt, sind vorzugsweise Riegelmittel an mindestens einem Teil des Ladebodens angeordnet, mit denen zwei Teile des Ladebodens in einer definierten zusammenwirkenden Position verriegelt werden können. Mit Vorteil ist in diesem Zusammenhang vorgesehen, dass die Riegelmittel aus einem in einem Teil des Ladebodens verschieblich gelagerten Stift bestehen, der in eine korrespondierende Bohrung in einem anderen Teil des Ladebodens eindringen kann. Der Stift kann dabei in eine Richtung quer zur Verschieberichtung des Ladebodens verschieblich gelagert sein.

Eine besonders bevorzugte Ausführungsform sieht vor, dass der Ladeboden aus vier Teilen besteht, von denen jeweils zwei Teile mit einem Scharnier verbunden sind.

Ferner können Rastmittel vorhanden sein, die die Teile des Ladebodens in zusammengeklapptem Zustand in vertikal ausgerichteter Position halten.

Hierdurch ergibt sich der besondere Vorteil, dass im zusammengeklappten Zustand des Ladebodens eine Abdeckung für die Radkästen des Kraftfahrzeugs geschaffen wird, die einen Stauraum für Zubehör definiert (Warndreieck, Verbandskasten, etc.), so dass im Falle dessen, dass der Ladeboden nicht benötigt wird, der verbleibende Lade- bzw. Kofferraum von derartigen Teilen frei gehalten wird. Dabei kann der hochgeklappte Ladeboden ansonsten vorhandene Abdeckelemente für die Radkästen ersetzen.

Ladeböden der gattungsgemäßen Art werden zumeist für Gewichte ausgelegt, die im Bereich von etwa 150 kg liegen. Hierdurch ist es in sehr einfacher Weise möglich, relativ sperrige und schwere Gegenstände zu handhaben, beispielsweise eine Waschmaschine. Steht das Fahrzeug, in dem ein schwerer Gegenstand auf dem Ladeboden transportiert wird, in leicht geneigter Stellung, beispielsweise an einem Hang, hat dies zur Folge, dass eine nicht unerhebliche Horizontalkomponente der Gewichtskraft auf den Ladeboden wirkt, die versucht, den Ladeboden aus dem Lade- bzw. Kofferraum herauszuschieben. Unter besonders ungünstigen Umständen, d.h. wenn das Fahrzeug bergauf an einem Hang steht, kommt es unter Umständen zu einer unerwünschten Ausschubbewegung des Ladebodens entgegen Fahrtrichtung, wenn die Heckklappe des Personenkraftwagens geöffnet wird, was ein nicht unerhebliches Gefahrenpotential darstellt.

Um auch unter ungünstigen Betriebsbedingungen sicherzustellen, dass sich der Ladeboden relativ zum Lade- bzw. Kofferraum nicht in unerwünschter und unkontrollierter Weise bewegen kann, sieht eine Weiterbildung vor, dass der Ladeboden mit Mitteln versehen ist, mit denen er relativ zum Lade- oder Kofferraum unverschiebbar festgelegt werden kann. Insbesondere ist vorgesehen, dass die Mittel ein Wirkelement aufweisen, das zwischen dem Lade- oder Kofferraum und dem Ladeboden eine kraft-, reib- oder formschlüssige Verbindung herstellen kann.

Hiernach ist also bei einem vorbekannten Fahrzeug mit ausziehbarem Ladeboden vorgesehen, dass durch geeignete Mittel sichergestellt ist, dass sich der Ladeboden nicht in unerwünschter und unkontrollierter Weise relativ zum Lade- bzw. Kofferraum bewegen kann.

Eine Weiterbildung sieht vor, dass das Wirkelement als am oder im Ladeboden angeordneter und um eine am oder im Ladeboden angeordnete Drehachse gelenkig gelagerter Arm ausgebildet ist. Dabei ist insbesondere vorgesehen, dass der Arm an seinem einen Ende einen Abschnitt aufweist, der mit einem am Lade- bzw. Kofferraum fest angeordneten Gegenabschnitt kraft-, reib- oder formschlüssig zusammenwirken kann.

Zum einen kann dabei vorgesehen werden, dass der Abschnitt des Arms eine Reibfläche bildet, die an dem Gegenabschnitt reibend anliegen kann.

Alternativ hierzu kann auch vorgesehen werden, dass der Abschnitt des Arms einen Vorsprung bildet, der in eine oder mehrere Ausnehmungen im Gegenabschnitt formschlüssig eingreifen kann. Bevorzugt ist dabei der Vorsprung des Arms zahnförmig ausgebildet, wobei die Ausnehmungen im Gegenabschnitt nach Art einer Zahnstange ausgeformt sind.

Eine besonders kompakte und einfach zu handhabende Bauform wird erreicht, wenn die Mittel zum Festlegen des Ladebodens relativ zum Lade- oder Kofferraum am anderen Ende des Arms ein Hubelement umfassen, mit dem das Ende in eine zur Verschieberichtung des Ladebodens senkrechte Richtung, vorzugsweise in Richtung der Vertikalen, verschoben werden kann. Das Hubelement kann dabei einen Schieber umfassen, der relativ zum Ladeboden, insbesondere in Verschieberichtung des Ladebodens, verschiebbar angeordnet ist und eine Betätigungsfläche aufweist, die das andere Ende des Arms in eine zur Verschieberichtung des Ladebodens senkrechte Richtung, vorzugsweise in Richtung der Vertikalen, verschieben kann.

Eine konstruktiv besonders kompakte Bauform wird erreicht, wenn die Betätigungsfläche des Schiebers als Keilfläche ausgebildet ist, die mit einer komplementär ausgeformten Gegenkeilfläche am anderen Ende des Arms zusammenwirken kann.

Der Schieber kann dabei mittels eines Federelements in eine Richtung, insbesondere in Verschieberichtung des Ladebodens, vorgespannt sein. Als Federelement kommt bevorzugt eine Spiralfeder zum Einsatz, die konzentrisch um eine Stange angeordnet ist, wobei die Stange so im Ladeboden festgelegt ist, dass ihre Achse in Verschieberichtung des Schiebers im Ladeboden weist. Die Anordnung kann dabei so ausgeführt werden, dass das Federelement die Mittel zum Festlegen des Ladebodens relativ zum Lade- oder Kofferraum so vorspannen, dass der Ladeboden relativ zum Lade- oder Kofferraum festgelegt wird.

Zur einfachen Handhabung des Verschiebens des Ladebodens relativ zum Lade- bzw. Kofferraum kann am Schieber ein ergonomisch angeformter Griff vorgesehen werden.

Im Falle dessen, dass sich bei entsprechenden Gewichtsverhältnissen und Betriebsbedingungen bei einem unerwünschten Einsetzen einer Ausschubbewegung des Ladebodens diese quasi automatisch gebremst wird, kann vorgesehen werden, dass am Hubelement, insbesondere am Schieber, ein Übertragungselement mit seinem einen Ende angeordnet ist, das den Ladeboden durchsetzt und an seinem anderen Ende eine Stoßleiste trägt.

Kommt es zu einer unerwünschten und unbeabsichtigten Ausschubbewegung des Ladebodens und besteht die Gefahr, dass der Ladeboden infolge der Bewegung im Zusammenwirken mit einem Hindernis eine Quetschkante für eine Person bildet, würde beim Einklemmen eines Körperteils die Stoßleiste und mit ihr über das Übertragungselement der Schieber betätigt, so dass automatisch eine Bremsung der Bewegung des Ladebodens eingeleitet würde.

Bevorzugt ist das Übertragungselement die Stange, die zur konzentrischen Führung der Spiralfeder dient.

Weiterhin kann vorgesehen werden, dass die Stoßleiste balkenförmig ausgebildet ist, wobei sie sich mit ihrer Längsachse quer zur Fahrtrichtung in einer horizontalen Ebene am in Verschieberichtung des Ladebodens gesehen hinteren Ende des Ladebodens erstreckt. Dabei kann sich die Stoßleiste im wesentlichen über die gesamte Breite des Ladebodens erstrecken.

Während grundsätzlich jeder Typ von Linearlagern zur Lagerung des Ladebodens in Frage kommt, hat es sich besonders bewährt, wenn das Linearlager zwei Führungsschienen aufweist, zwischen denen Wälzkörper, insbesondere Kugeln, angeordnet sind, die von einem Käfig geführt werden, der sich in Fahrtrichtung über eine definierte Länge erstreckt. Hiernach kommt ein Linearlager zum Einsatz, das nur für eine begrenzte Hubbewegung ausgelegt ist, bei der jedoch eine sehr solide und stabile Führung des Ladebodens relativ zum Lade- bzw. Kofferraum sichergestellt ist.

Mit dem Erfindungsvorschlag wird eine einfache und preiswert herstellbare Möglichkeit geschaffen, einen verfahrbaren Ladeboden im Lade- bzw. Kofferraum eines Fahrzeugs vorzusehen, der bei Bedarf außer Funktion gebracht werden kann, so dass der Lade- bzw. Kofferraum nicht in seinen Ausmaßen beschränkt wird.

In der Zeichnung sind Ausführungsbeispiele der Erfindung dargestellt. Es zeigen:
- Figur 1: in dreidimensionaler Ansicht den Blick in einen Kofferraum eines Personenkraftwagens, in dem ein klappbar ausgebildeter Ladeboden angeordnet ist,
- Figur 2: dieselbe Anordnung wie in Figur 1 aus einem anderen Blickwinkel,
- Figur 3: in perspektivischer Ansicht einen Teil des Ladebodens,
- Figur 4: in perspektivischer Ansicht einen Teil des Linearlagers samt einem Teil der Mittel zum Festlegen des Ladebodens relativ zum Lade- oder Kofferraum gemäß einer ersten Ausgestaltung,
- Figur 5: die zu Figur 4 analoge Darstellung in einer alternativen Ausgestaltung,
- Figur 6: in perspektivischer Darstellung den Endabschnitt des Ladebodens mit einem Teil der Mittel zum Festlegen des Ladebodens relativ zum Lade- oder Kofferraum in der Stellung, in der der Ladeboden relativ zum Lade- oder Kofferraum festgelegt ist,
- Figur 7: die zu Figur 6 analoge Darstellung, wobei die Linearbewegung des Ladebodens relativ zum Lade- oder Kofferraum freigegeben ist,
- Figur 8: die Draufsicht auf den Ladeboden im Lade- oder Kofferraum und
- Figur 9: den Schnitt A-A gemäß Figur 8.

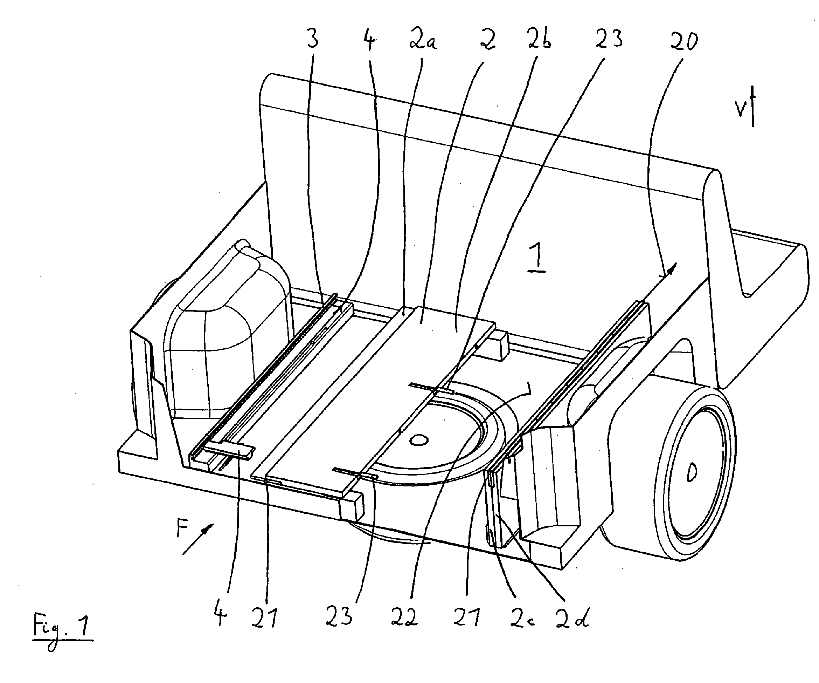

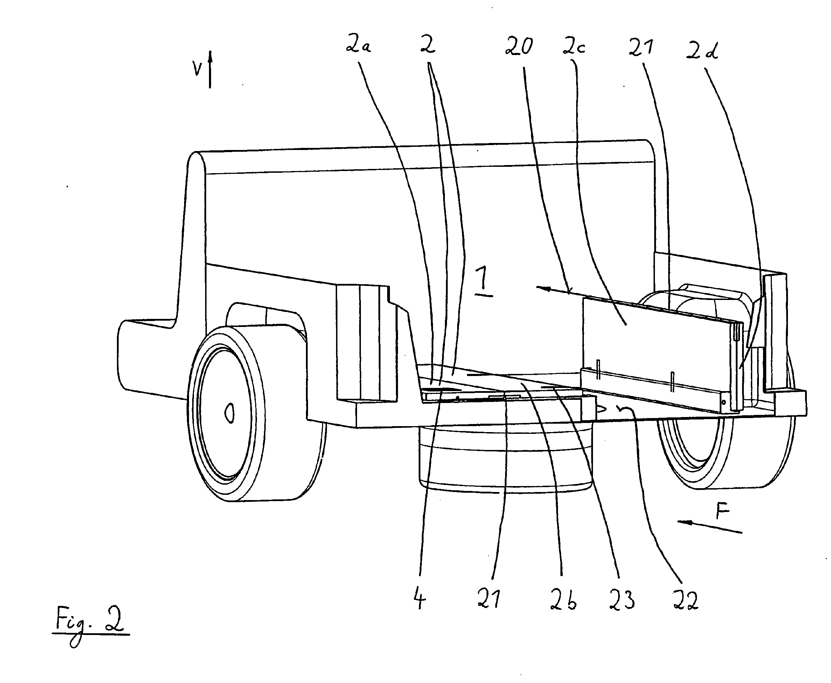

In den Figuren 1 und 2 ist der hintere Bereich eines Personenkraftwagens dargestellt, nämlich der Lade- oder Kofferraum 1 des Wagens. In diesem ist ein Ladeboden 2 angeordnet, der bei geöffneter Heckklappe des Personenkraftwagens in eine Verschieberichtung ausgezogen werden kann, wobei diese in den Ausführungsbeispielen mit der Fahrtrichtung F des Fahrzeugs zusammenfällt.

Der Ladeboden 2 ist klappbar ausgeführt. Vier Teile 2a, 2b, 2c und 2d des Ladebodens 2 liegen bei Benutzung des Ladebodens 2 nebeneinander und bilden so die Auflagefläche für das zu transportierende Gut. Dabei sind jeweils zwei Teile des Ladebodens, nämlich die Teile 2a und 2b bzw. die Teile 2c und 2d, mittels je eines Scharniers 21 gelenkig miteinander verbunden, wobei die Klappachse 20 des Scharniers 21 in Verschieberichtung des Ladebodens 2, d.h. im Ausführungsbeispiel in Fahrtrichtung F, weist.

In den beiden Figuren 1 und 2 ist die linke Hälfte des Ladebodens 2 mit den Teilen 2a und 2b in der Lage skizziert, in der der Ladeboden 2 benutzt wird. In der rechten Bildhälfte ist die Position skizziert, in der die rechte Hälfte des Ladebodens 2 mit den Teilen 2c und 2d hochgeklappt und damit nicht zur Benutzung vorgesehen ist. Wie insbesondere in Figur 2 und dort in der rechten Bildhälfte zu sehen ist, sind die beiden Teile 2c und 2d des Ladebodens 2 mittels des Scharniers 21 zusammengeklappt und insgesamt in eine vertikale Position (Vertikale V) gebracht. In dieser Position liegt der Boden 22 des Lade- oder Kofferraums 1 frei, was in vorteilhafter Weise zur Folge hat, dass die zur Verfügung stehende Ladehöhe nicht durch den Ladeboden 2 reduziert ist. Des weiteren werden die Radkästen des Kraftfahrzeugs abgedeckt, so dass sich in diesem Bereich ein abgeteilter Stauraum, beispielsweise für Kraftfahrzeugzubehör, befindet.

Damit der aus den Teilen 2a, 2b, 2c und 2d bestehende Ladeboden 2 für die Benutzung einen stabilen Verbund bildet, sind Riegelmittel 23 vorgesehen, die im Ausführungsbeispiel aus einem verschiebbaren Stift bestehen, der quer zur Verschieberichtung des Ladebodens 2 aus dem Teil 2b des Ladebodens 2 ausgeschoben werden kann, so dass er in nicht dargestellte Bohrungen im Teil 2c des Ladebodens 2 eingreift. Die Teile 2b und 2c des Ladebodens 2 können damit im heruntergeklappten Zustand des Ladebodens 2 so verriegelt werden, dass beide Teile eine stabile Platte bilden.

Damit schwere und sperrige Gegenstände leichter auf dem Ladeboden 2 positioniert werden können, ist vorgesehen, dass der Ladeboden 2 in Fahrtrichtung F des Kraftfahrzeugs bei geöffneter Heckklappe ausgezogen werden kann. Hierfür sind zwei nur sehr schematisch skizzierte Linearlager 3 vorgesehen, die an den beiden seitlichen Enden des Ladebodens 2 angeordnet sind. Die Linearlager 3 bestehen jeweils aus zwei Führungsschienen, zwischen denen Kugeln angeordnet sind. Die Kugeln werden von einem Käfig geführt, der sich in Verschieberichtung des Ladebodens 2 über eine definierte Länge linear erstreckt. Damit entsteht ein Linearlager 3, das nur eine begrenzte Linearverschiebung zulässt, die so gewählt ist, dass der gewünschte Auszugsweg für den Ladeboden 2 gegeben ist.

Damit der Ladeboden 2 stets in einer gewünschten Position relativ zum Lade- oder Kofferraum 1 arretiert bzw. festgelegt werden kann, sind Mittel 4 zum Festlegen vorgesehen. Details dieser Mittel 4 sind in den weiteren Figuren dargestellt.

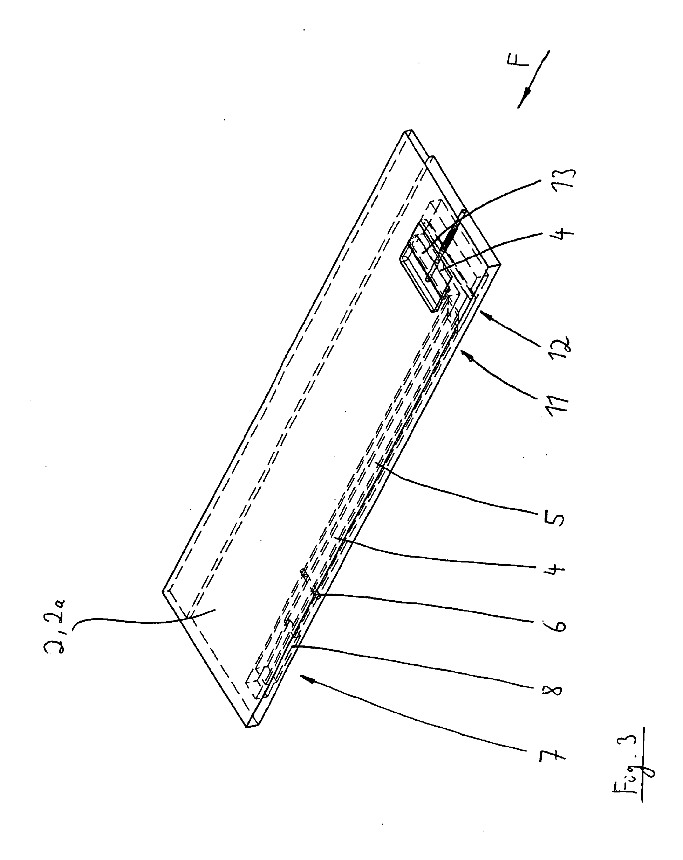

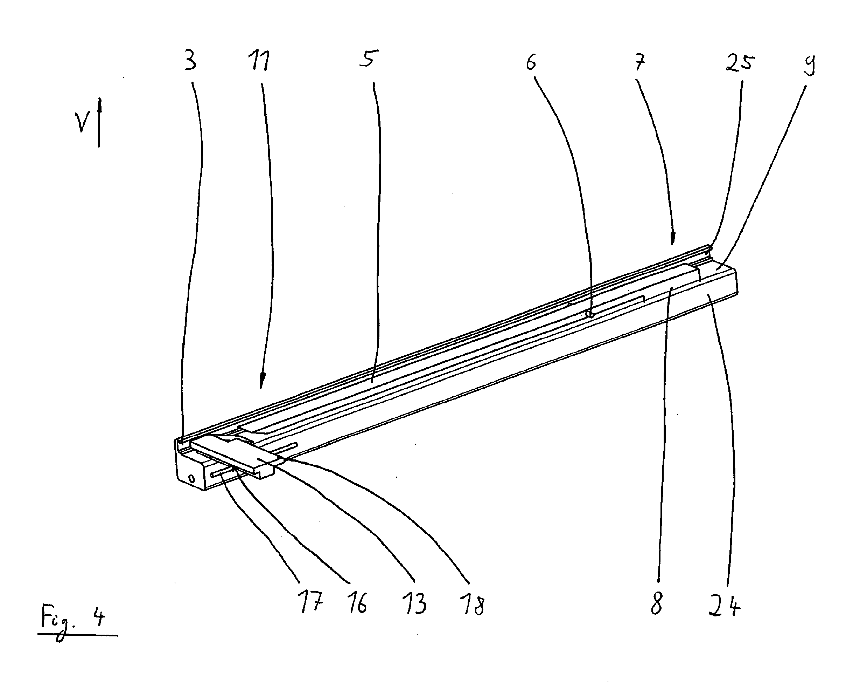

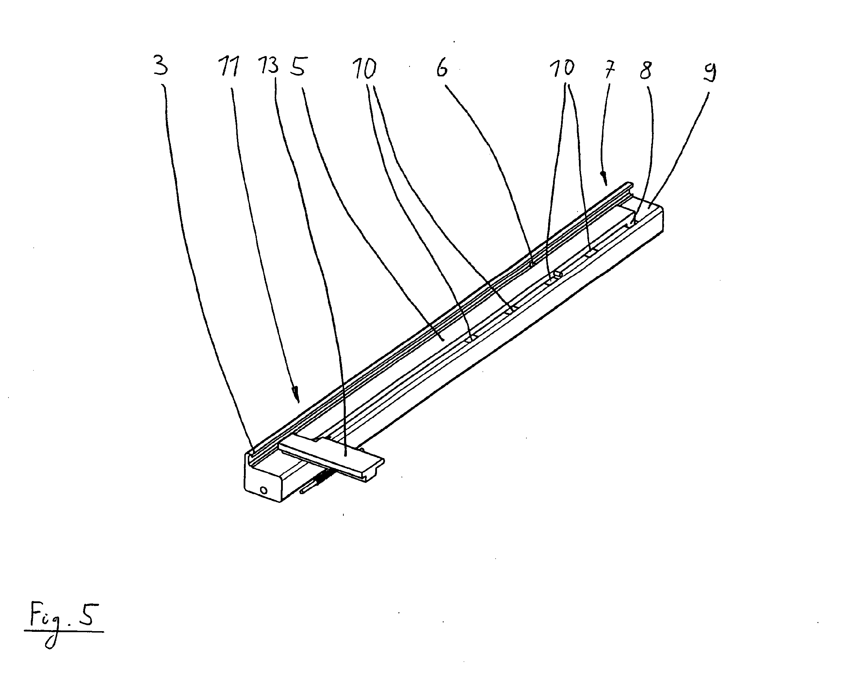

In Figur 3 ist die eine Hälfte des Ladebodens 2 mit den Teilen 2a und 2b dargestellt. Im linken Endbereich des Teils 2a des Ladebodens 2 ist eine nutförmige Ausnehmung eingebracht, in der ein Wirkelement 5 in Form eines gelenkig gelagerten Arms untergebracht ist. Eine Drehachse 6, die im Teil 2a des Ladebodens 2 festgelegt ist, lagert den Arm 5 so, dass er um diese Achse drehbar ist. Im einen Ende 7 des Arms 5 ist ein Abschnitt 8 angeordnet, der zum Zusammenwirken mit einem Gegenabschnitt 9 (siehe Figur 4 und Figur 5) ausgelegt ist. Namentlich kommt es zu einem kraft-, reib- oder formschlüssigen Zusammenwirken des Abschnitts 8 des Arms 5 und des Gegenabschnitts 9, wobei der Gegenabschnitt 9 relativ zum Lade- oder Kofferraum 1 fest und unverschieblich angeordnet ist.

Wie später noch im Detail gezeigt wird, kann eine Verschwenkbewegung um die Drehachse 6 den Abschnitt 8 des Arms 5 so an den Gegenabschnitt 9 anpressen, dass es zwischen diesen beiden Abschnitten 8, 9 zu einer hinreichend großen Reibkraft kommt, die ein Verschieben des Ladebodens 2 relativ zum Lade- oder Kofferraum 1 unmöglich macht. Diese Situation ist in Figur 4 skizziert. Figur 5 zeigt ein alternatives Ausführungsbeispiel, wobei hier kein Reibschluss, sondern ein Formschluss zum Einsatz kommt. Hierzu ist der Abschnitt 8 des Arms 5 als Vorsprung ausgebildet, der in entsprechende Ausnehmungen 10 im Gegenabschnitt 9 im gewünschten Positionen einrasten kann. Eine entsprechende Anzahl Ausnehmungen 10 sind dabei im Gegenabschnitt 9 in definiertem Abstand zueinander so angeordnet, dass der Ladeboden 2 in unterschiedlichen Rastpositionen relativ zum Lade- oder Kofferraum 1 arretiert werden kann. Nicht dargestellt ist eine weitere Ausführungsvariante nach der der Abschnitt 8 des Arms 5 als Zahn ausgebildet ist und mit Ausnehmungen 10 im Gegenabschnitt 9 nach Art einer Zahnstange zusammenwirkt. Hierdurch kann eine formschlüssige Festlegung des Ladebodens 2 in einer Vielzahl von Positionen bewerkstelligt werden.

Wie in der Zusammenschau der Figuren 3 bis 7 gesehen werden kann, befindet sich am anderen Ende 11 des Arms 5 ein Hubelement 12, mit dem dieses Ende 11 im Ausführungsbeispiel in vertikaler Richtung angehoben werden kann. Das hat aufgrund der gelenkigen Lagerung des Arms 5 um die Drehachse 6 zur Folge, dass bei Anheben des einen Endes 11 des Arms 5 das andere Ende 7 in die entsprechende Gegenrichtung bewegt wird. Hierdurch wird der Kraft-, Reib- bzw. Formschluss der Abschnitte 8 und 9 hergestellt.

Das Hubelement 12 besteht im Ausführungsbeispiel aus zwei Schiebern 13, die in Verschieberichtung des Ladebodens 2 (Fahrtrichtung F) verschieblich in je einem Teil des Ladebodens 2, nämlich in den Teilen 2a und 2d des Ladebodens 2, gelagert sind. Am Schieber 13 ist eine keilförmig ausgebildete Betätigungsfläche 14 vorgesehen, die mit einer Gegenkeilfläche 15 am Ende 11 des Arms 5 zusammenwirkt. Damit wird erreicht, dass bei Verschiebung des Schiebers 13 in Richtung der Drehachse 6 die gewünschte Verriegelungs- bzw. Klemmposition des Arms 5 eingeleitet wird, so dass der Ladeboden 2 relativ zum Lade- oder Kofferraum 1 unverschieblich ist. Wird indes der Schieber 13 von der Drehachse 6 weg verschoben, wird der Arm 5 an seinem Ende 11 entlastet, so dass die kraft-, reib- bzw. formschlüssige Verbindung zwischen den Abschnitten 8 und 9 aufgehoben wird. Nicht dargestellt ist, dass in diesem Falle eine in vertikaler Richtung V wirkende Feder den Arm 5 in Entriegelungsposition bewegt.

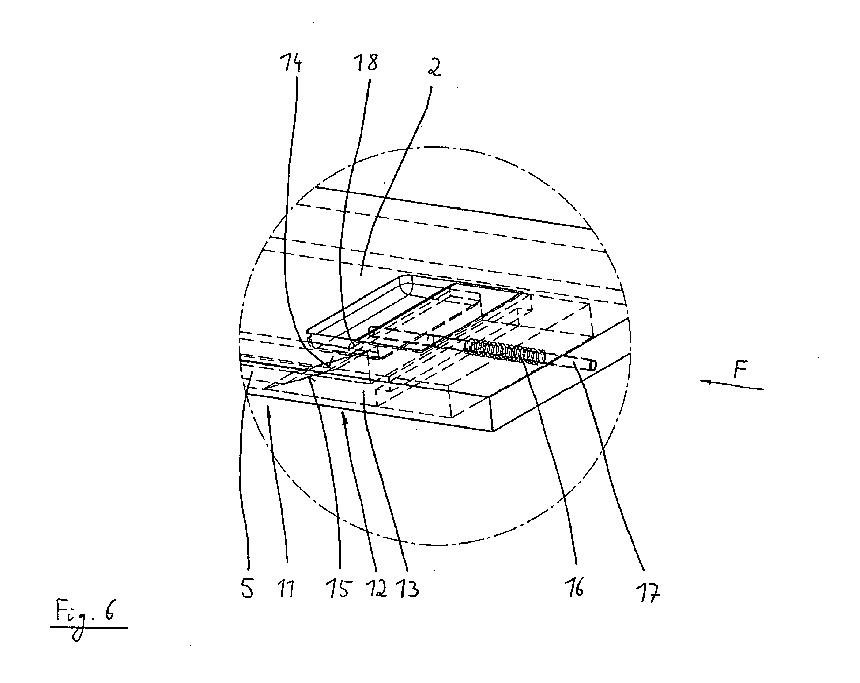

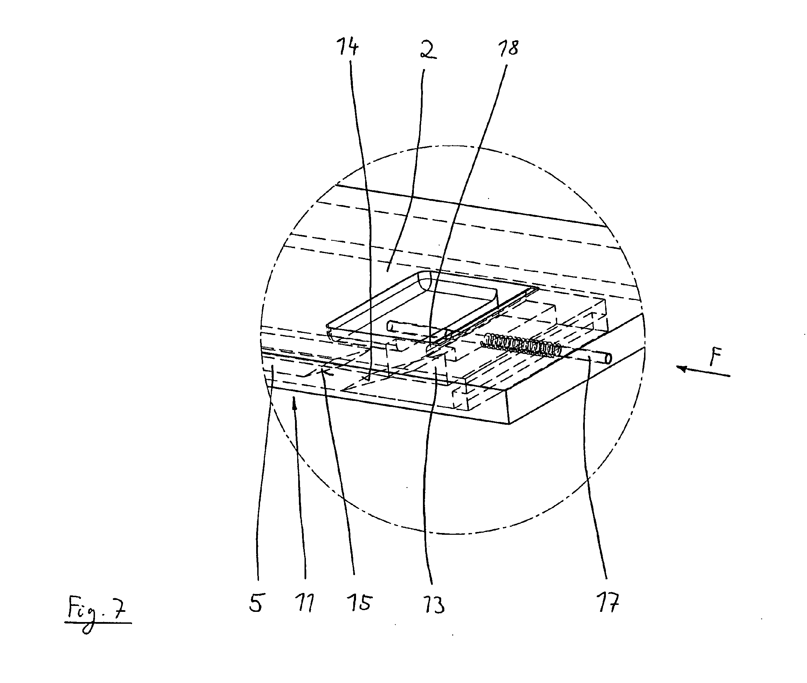

Wie aus der Zusammenschau der Figuren 6 und 7 gesehen werden kann, ist ein Federelement 16 in Form einer Spiralfeder vorgesehen, die im nicht betätigten Zustand des Schiebers diesen in Richtung Drehachse 6 vorspannt und so eine Verriegelung bzw. Arretierung des Ladebodens 2 bewerkstelligt. Zum Entriegeln des Ladebodens zwecks Ausziehen aus dem Lade- oder Kofferraum 1 werden die beiden Schieber 13 in den Teilen 2a bzw. 2d des Ladebodens 2 an einem Griff 18 gefasst und von der Drehachse 6 weg gezogen. Dies erfolgt gegen den Widerstand der Spiralfeder 16. Der Arm 5 wird damit an seinem Ende 11 freigegeben, so dass die Verriegelung bzw. Arretierung des Ladebodens 2 aufgehoben ist; der Ladeboden 2 kann relativ zum Lade- oder Kofferraum 1 verschoben bzw. ausgezogen und eingeschoben werden. Werden die Griffe 18 an den Schiebern 13 indes wieder los gelassen, bewirkt die Spiralfeder 16 über die Betätigungsfläche 14 und die Gegenkeilfläche 15 ein Verklemmen bzw. Arretieren des Ladebodens 2.

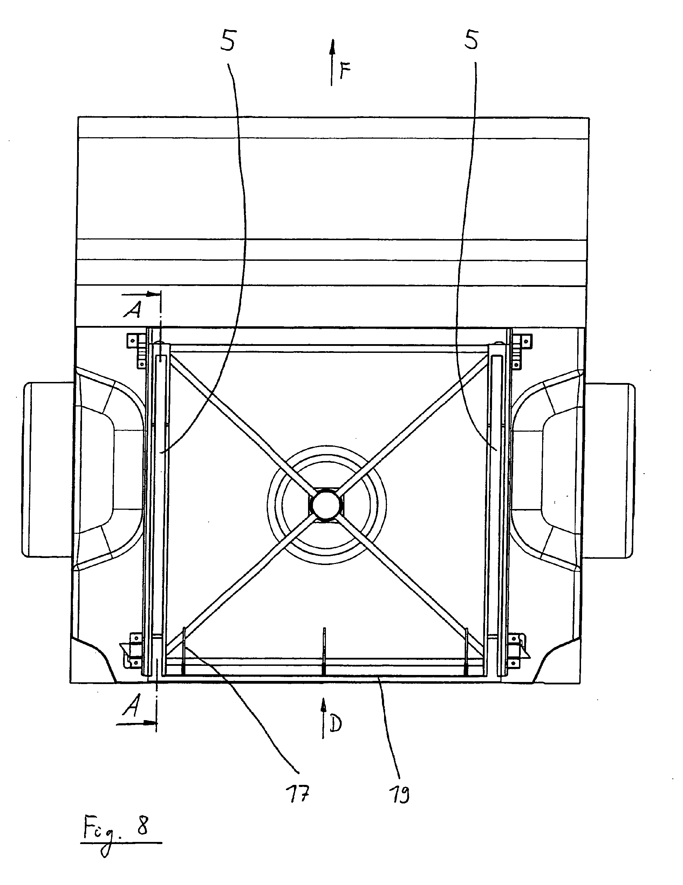

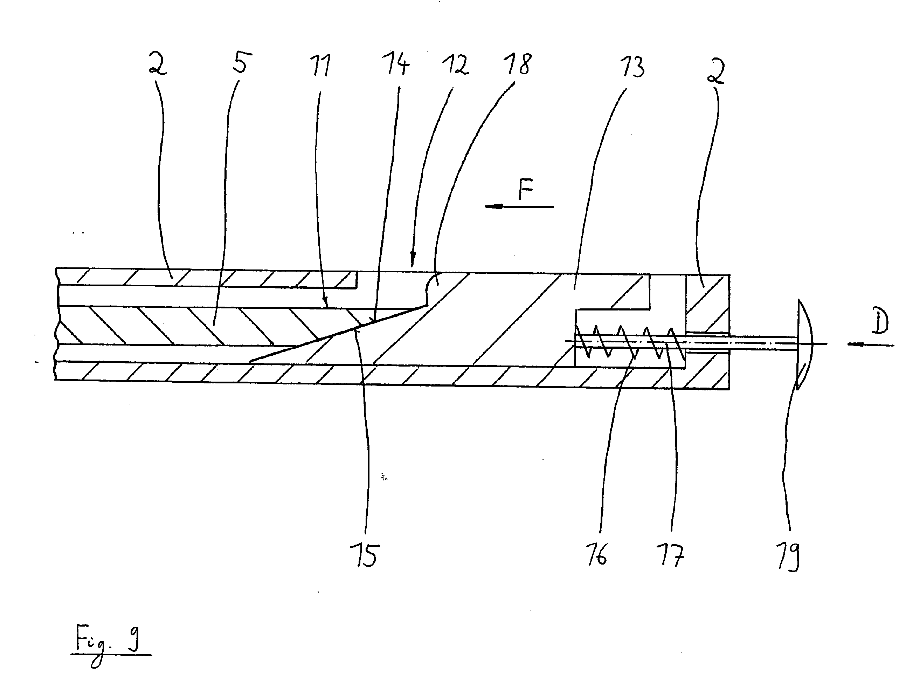

Wie weiter gesehen werden kann, ist die Spiralfeder 16 auf einer Stange 17 gelagert, wobei sich die Achse der Stange 17 in Verschieberichtung des Ladebodens 2 (Fahrtrichtung F) erstreckt. Zur Erhöhung der Sicherheit gegen unbeabsichtigtes Verschieben des Ladebodens 2 ist die Stange 17 als Übertragungselement ausgebildet, das sich durch das hintere Ende des Ladebodens 2, d.h. durch den Teil 2a des Ladebodens 2, hindurch erstreckt, wobei am Ende der Stange 17 eine Stoßleiste 19 angeordnet ist. Diese Stoßleiste ist in den Figuren 8 und 9 zu erkennen. Wie insbesondere in Figur 9 gesehen werden kann, ist die Stoßleiste 19 über die Stange 17 so am Schieber 13 angeordnet, dass bei Ausübung einer Druckkraft D auf die Stoßleiste 19 der Schieber 13 in Arretierungs- bzw. Klemmposition bewegt wird. Wie weiter aus Figur 9 gesehen werden kann, bewegt in diesem Falle der Schieber 13 den Arm 5 mit seinem Ende 12 in Vertikalrichtung, was zum Klemmen des Abschnitts 8 des Arms 5 am Gegenabschnitt 9 führt. Durch diese Ausgestaltung kann erreicht werden, dass es bei Quetschgefahr durch unbeabsichtigtes Herausfahren des Ladebodens 2 zu einer Bremsung des Ladebodens 2 kommt.

Als Linearlager 3 können, wie bereits erwähnt, übliche Lagersysteme zum Einsatz kommen. Bevorzugt ist an einer fest im Lade- oder Kofferraum 1 angeordneten Schiene 24 eine Führungsschiene 25 des Linearlagers angeordnet (siehe Figur 4). In den Teilen 2a bzw. 2d des Ladebodens 2 sind die entsprechenden, nicht dargestellten Gegenführungsschienen des Linearlagers 3 angeordnet, wobei zwischen der Führungsschiene 25 und der Gegenführungsschiene Kugeln angeordnet sind.

### Bezugszeichenliste

- 1: Lade- oder Kofferraum
- 2: Ladeboden
- 2a: Teil des Ladebodens
- 2b: Teil des Ladebodens
- 2c: Teil des Ladebodens
- 2d: Teil des Ladebodens
- 3: Linearlager
- 4: Mittel zum Festlegen des Ladebodens relativ zum Lade- oder Kofferraum
- 5: Wirkelement (Arm)
- 6: Drehachse
- 7: Ende des Arms
- 8: Abschnitt des Arms
- 9: Gegenabschnitt
- 10: Ausnehmung im Gegenabschnitt
- 11: Ende des Arms
- 12: Hubelement
- 13: Schieber
- 14: Betätigungsfläche
- 15: Gegenkeilfläche
- 16: Federelement (Spiralfeder)
- 17: Stange, Übertragungselement
- 18: Griff
- 19: Stoßleiste
- 20: Klappachse
- 21: Scharnier
- 22: Boden des Lade- oder Kofferraums
- 23: Riegelmittel
- 24: Schiene
- 25: Führungsschiene

- F: Fahrtrichtung
- V: Vertikale
- D: Druckkraft

## Patentansprüche

1. Ausziehbarer Ladeboden für ein Fahrzeug, insbesondere für einen Personenkraftwagen, der in einem Lade- oder Kofferraum (1) angeordnet werden kann und der, vorzugsweise in Fahrtrichtung (F) des Fahrzeugs, auf mindestens einem Linearlager (3) verschiebbar angeordnet ist, wobei der Ladeboden (2) aus mindestens zwei Teilen (2a, 2b, 2c, 2d) besteht, die relativ zueinander klappbar ausgebildet sind, **dadurch gekennzeichnet, dass** die Klappachse (20) zwischen den Teilen (2a, 2b, 2c, 2d) in Verschieberichtung des Ladebodens (2) weist, wobei zumindest zwei Teile (2a, 2b; 2c, 2d) des Ladebodens (2) in zusammengeklapptem Zustand in eine vertikal ausgerichtete Position geklappt werden können.

2. Ausziehbarer Ladeboden nach Anspruch 1, **dadurch gekennzeichnet, dass** zumindest zwei Teile (2a, 2b; 2c, 3d) des Ladebodens (2) mit einem Scharnier (21) verbunden sind.

3. Ausziehbarer Ladeboden nach Anspruch 1 oder 2, **dadurch gekennzeichnet, dass** Riegelmittel (23) an mindestens einem Teil (2b) des Ladebodens (2) angeordnet sind, mit denen zwei Teile (2b, 2c) des Ladebodens (2) in einer definierten zusammenwirkenden Position verriegelt werden können.

4. Ausziehbarer Ladeboden nach Anspruch 3, **dadurch gekennzeichnet, dass** die Riegelmittel (23) aus einem in einem Teil (2b) des Ladebodens (2) verschieblich gelagerten Stift bestehen, der in eine korrespondierende Bohrung in einem anderen Teil (2c) des Ladebodens (2) eindringen kann.

5. Ausziehbarer Ladeboden nach Anspruch 4, **dadurch gekennzeichnet, dass** der Stift in eine Richtung quer zur Verschieberichtung des Ladebodens (2) verschieblich gelagert ist.

6. Ausziehbarer Ladeboden nach einem der Ansprüche 1 bis 5, **dadurch gekennzeichnet, dass** der Ladeboden (2) aus vier Teilen (2a, 2b, 2c, 2d) besteht, von denen jeweils zwei Teile (2a, 2b; 2c, 3d) mit einem Scharnier (21) verbunden sind.

7. Ausziehbarer Ladeboden nach einem der Ansprüche 1 bis 6, **dadurch gekennzeichnet, dass** Rastmittel vorhanden sind, die die Teile (2a, 2b; 2c, 2d) des Ladebodens (2) in zusammengeklapptem Zustand in vertikal ausgerichteter Position halten.

8. Ausziehbarer Ladeboden nach einem der Ansprüche 1 bis 7, **dadurch gekennzeichnet, dass** der Ladeboden (2) mit Mitteln (4) versehen ist, mit denen er relativ zum Lade- oder Kofferraum (1) unverschiebbar festgelegt werden kann.

9. Ausziehbarer Ladeboden nach Anspruch 8, **dadurch gekennzeichnet, dass** die Mittel (4) ein Wirkelement (5) aufweisen, das zwischen dem Lade- oder Kofferraum (1) und dem Ladeboden (2) eine kraft-, reib- oder formschlüssige Verbindung herstellen können.

10. Ausziehbarer Ladeboden nach Anspruch 8 oder 9, **dadurch gekennzeichnet, dass** das Wirkelement (5) als am oder im Ladeboden (2) angeordneter und um eine am oder im Ladeboden (2) angeordnete Drehachse (6) gelenkig gelagerter Arm (5) ausgebildet ist.

11. Ausziehbarer Ladeboden nach Anspruch 10, **dadurch gekennzeichnet, dass** der Arm (5) an seinem einen Ende (7) einen Abschnitt (8) aufweist, der mit einem am Lade- oder Kofferraum (1) fest angeordneten Gegenabschnitt (9) kraft-, reib- oder formschlüssig zusammenwirken kann.

12. Ausziehbarer Ladeboden nach Anspruch 11, **dadurch gekennzeichnet, dass** der Abschnitt (8) des Arms (5) eine Reibfläche bildet, die an dem Gegenabschnitt (9) reibend anliegen kann.

13. Ausziehbarer Ladeboden nach Anspruch 11, **dadurch gekennzeichnet, dass** der Abschnitt (8) des Arms (5) einen Vorsprung bildet, der in eine oder mehrere Ausnehmungen (10) im Gegenabschnitt (9) formschlüssig eingreifen kann.

14. Ausziehbarer Ladeboden nach Anspruch 13, **dadurch gekennzeichnet, dass** der Vorsprung (8) des Arms (5) zahnförmig ausgebildet ist und die Ausnehmungen (10) im Gegenabschnitt (9) nach Art einer Zahnstange ausgebildet sind.

15. Ausziehbarer Ladeboden nach einem der Ansprüche 10 bis 14, **dadurch gekennzeichnet, dass** die Mittel (4) am anderen Ende (11) des Arms (5) ein Hubelement (12) umfassen, mit dem das Ende (11) in eine zur Verschieberichtung des Ladebodens (2) senkrechte Richtung, vorzugsweise in Richtung der Vertikalen (V), verschoben werden kann.

16. Ausziehbarer Ladeboden nach Anspruch 15, **dadurch gekennzeichnet, dass** das Hubelement (12) einen Schieber (13) umfasst, der relativ zum Ladeboden (2), insbesondere in Verschieberichtung des Ladebodens (2), verschiebbar angeordnet ist und eine Betätigungsfläche (14) aufweist, die das andere Ende (11) des Arms (5) in eine zur Verschieberichtung des Ladebodens (2) senkrechte Richtung, vorzugsweise in Richtung der Vertikalen (V), verschieben kann.

17. Ausziehbarer Ladeboden nach Anspruch 16, **dadurch gekennzeichnet, dass** die Betätigungsfläche (14) des Schiebers (13) als Keilfläche ausgebildet ist, die mit einer komplementär ausgeformten Gegenkeilfläche (15) am anderen Ende (11) des Arms (5) zusammenwirken kann.

18. Ausziehbarer Ladeboden nach Anspruch 16 oder 17, **dadurch gekennzeichnet, dass** der Schieber (13) mittels eines Federelements (16) in eine Richtung, insbesondere in Verschieberichtung des Ladebodens (2), vorgespannt ist.

19. Ausziehbarer Ladeboden nach Anspruch 18, **dadurch gekennzeichnet, dass** das Federelement (16) eine Spiralfeder ist, die konzentrisch um eine Stange (17) angeordnet ist, wobei die Stange (17) so im Ladeboden (2) festgelegt ist, dass ihre Achse in Verschieberichtung des Schiebers (13) im Ladeboden (2) weist.

20. Ausziehbarer Ladeboden nach Anspruch 18 oder 19, **dadurch gekennzeichnet, dass** das Federelement (16) die Mittel (4) so vorspannen, dass der Ladeboden (2) relativ zum Lade- oder Kofferraum (1) festgelegt wird.

21. Ausziehbarer Ladeboden nach einem der Ansprüche 16 bis 20, **dadurch gekennzeichnet, dass** am Schieber (13) ein Griff oder Druckknopf (18) angeordnet ist.

22. Ausziehbarer Ladeboden nach einem der Ansprüche 15 bis 21, **dadurch gekennzeichnet, dass** am Hubelement (12), insbesondere am Schieber (13), mindestens ein Übertragungselement (17) mit seinem einen Ende angeordnet ist, das den Ladeboden (2) durchsetzt und an seinem anderen Ende eine Stoßleiste (19) trägt.

23. Ausziehbarer Ladeboden nach Anspruch 22, **dadurch gekennzeichnet, dass** das Übertragungselement (17) die Stange ist, die zur konzentrischen Führung der Spiralfeder (16) dient.

24. Ausziehbarer Ladeboden nach Anspruch 22 oder 23, **dadurch gekennzeichnet, dass** die Stoßleiste (19) balkenförmig ausgebildet ist, wobei sie sich mit ihrer Längsachse quer zur Verschieberichtung des Ladebodens (2) in einer horizontalen Ebene am in Verschieberichtung des Ladebodens (2) gesehen hinteren und/oder vorderen Ende des Ladebodens (2) erstreckt.

25. Ausziehbarer Ladeboden nach einem der Ansprüche 22 bis 24, **dadurch gekennzeichnet, dass** die Stoßleiste (19) sich im wesentlichen über die gesamte Breite des Ladebodens (2) erstreckt.

26. Ausziehbarer Ladeboden nach einem der Ansprüche 1 bis 25, **dadurch gekennzeichnet, dass** das Linearlager (3) zwei Führungsschienen aufweist, zwischen denen Wälzkörper, insbesondere Kugeln, angeordnet sind, die von einem Käfig geführt werden, der sich in Verschieberichtung des Ladebodens (2) über eine definierte Länge erstreckt.

## Claims

1. Extendable loading platform for a vehicle, in particular for a passenger vehicle, which can be arranged in a loading space or boot space (1) and which is arranged displaceably, preferably in the direction of travel (F) of the vehicle, on at least one linear bearing (3), wherein the loading platform (2) comprises at least two parts (2a, 2b, 2c, 2d) which are designed such that they can be folded relative to each other, **characterized in that** the folding axis (20) between the parts (2a, 2b, 2c, 2d) points in the direction of displacement of the loading platform (2), with it being possible for at least two parts (2a, 2b; 2c, 2d) of the loading platform (2) to be folded into a vertically oriented position in the folded-up state.

2. Extendable loading platform according to Claim 1, **characterized in that** at least two parts (2a, 2b; 2c, 2d) of the loading platform (2) are connected to a hinge (21).

3. Extendable loading platform according to Claim 1 or 2, **characterized in that** locking means (23) are arranged on at least one part (2b) of the loading platform (2) and can be used to lock two parts (2b, 2c) of the loading platform (2) in a defined, interacting position.

4. Extendable loading platform according to Claim 3, **characterized in that** the locking means (23) comprise a pin which is mounted displaceably in one part (2b) of the loading platform (2) and can penetrate a corresponding hole in another part (2c) of the loading platform (2).

5. Extendable loading platform according to Claim 4, **characterized in that** the pin is mounted displaceably in a direction transversely with respect to the direction of displacement of the loading platform (2).

6. Extendable loading platform according to one of Claims 1 to 5, **characterized in that** the loading platform (2) comprises four parts (2a, 2b, 2c, 2d), every two parts (2a, 2b; 2c, 2d) of which are connected to a hinge (21).

7. Extendable loading platform according to one of Claims 1 to 6, **characterized in that** there are latching means which hold the parts (2a, 2b; 2c, 2d) of the loading platform (2) in a vertically oriented position in the folded-up state.

8. Extendable loading platform according to one of Claims 1 to 7, **characterized in that** the loading platform (2) is provided with means (4) with which it can be fixed non-displaceably relative to the loading space or boot space (1).

9. Extendable loading platform according to Claim 8, **characterized in that** the means (4) have an active element (5) which can produce a non-positive, frictional or positive connection between the loading space or boot space (1) and the loading platform (2).

10. Extendable loading platform according to Claim 8 or 9, **characterized in that** the active element (5) is designed as an arm (5) which is arranged on or in the loading platform (2) and is mounted in an articulated manner about an axis of rotation (6) arranged on or in the loading platform (2).

11. Extendable loading platform according to Claim 10, **characterized in that** one end (7) of the arm (5) has a portion (8) which can interact in a non-positive, frictional or positive manner with a mating portion (9) arranged fixedly on the loading space or boot space (1).

12. Extendable loading platform according to Claim 11, **characterized in that** the portion (8) of the arm (5) forms a frictional surface which can bear in a rubbing manner against the mating portion (9).

13. Extendable loading platform according to Claim 11, **characterized in that** the portion (8) of the arm (5) forms a projection which can engage in a positive manner in one or more recesses (10) in the mating portion (9).

14. Extendable loading platform according to Claim 13, **characterized in that** the projection (8) of the arm (5) is of tooth-shaped design, and the recesses (10) in the mating portion (9) are designed in the manner of a rack.

15. Extendable loading platform according to one of Claims 10 to 14, **characterized in that** the means (4) at the other end (11) of the arm (5) comprise a lifting element (12) with which the end (11) can be displaced in a direction perpendicular to the direction of displacement of the loading platform (2), preferably in the direction of the vertical (V).

16. Extendable loading platform according to Claim 15, **characterized in that** the lifting element (12) comprises a slide (13) which is arranged displaceably relative to the loading platform (2), in particular in the direction of displacement of the loading platform (2), and has an actuating surface (14) which can displace the other end (11) of the arm (5) in a direction perpendicular to the direction of displacement of the loading platform (2), preferably in the direction of the vertical (V).

17. Extendable loading platform according to Claim 16, **characterized in that** the actuating surface (14) of the slide (13) is designed as a wedge surface which can interact with a complementarily shaped mating wedge surface (15) at the other end (11) of the arm (5).

18. Extendable loading platform according to Claim 16 or 17, **characterized in that** the slide (13) is prestressed by means of a spring element (16) in one direction, in particular in the direction of displacement of the loading platform (2).

19. Extendable loading platform according to Claim 18, **characterized in that** the spring element (16) is a spiral spring which is arranged concentrically about a rod (17), with the rod (17) being fixed in the loading platform (2) in such a manner that its axis points in the direction of displacement of the slide (13) in the loading platform (2).

20. Extendable loading platform according to Claim 18 or 19, **characterized in that** the spring element (16) prestresses the means (4) in such a manner that the loading platform (2) is fixed relative to the loading space or boot space (1).

21. Extendable loading platform according to one of Claims 16 to 20, **characterized in that** a handle or push button (18) is arranged on the slide (13).

22. Extendable loading platform according to one of Claims 15 to 21, **characterized in that** at least one transmission element (17) is arranged at its one end, which passes through the loading platform (2), on the lifting element (12), in particular on the slide (13), and bears an impact strip (19) at its other end.

23. Extendable loading platform according to Claim 22, **characterized in that** the transmission element (17) is the rod which serves to concentrically guide the spiral spring (16).

24. Extendable loading platform according to Claim 22 or 23, **characterized in that** the impact strip (19) is of bar-shaped design, said impact strip extending with its longitudinal axis transversely with respect to the direction of displacement of the loading platform (2) in a horizontal plane at the rear and/or front end of the loading platform (2), as seen in the direction of displacement of the loading platform (2).

25. Extendable loading platform according to one of Claims 22 to 24, **characterized in that** the impact strip (19) extends essentially over the entire width of the loading platform (2).

26. Extendable loading platform according to one of Claims 1 to 25, **characterized in that** the linear bearing (3) has two guide rails between which rolling bodies, in particular balls, are arranged, which are guided by a cage which extends over a defined length in the direction of displacement of the loading platform (2).

## Revendications

1. Plateau de chargement extensible pour un véhicule, en particulier pour un véhicule automobile léger, qui peut être disposé dans un espace de chargement ou un coffre (1), et qui, de préférence dans la direction de conduite (F) du véhicule, est disposé de manière à pouvoir glisser sur au moins un palier linéaire (3), le plateau de chargement (2) se composant d'au moins deux parties (2a, 2b, 2c, 2d), qui sont réalisées de manière à pouvoir être rabattues l'une vers l'autre, **caractérisé en ce que** l'axe de rabattement (20) entre les parties (2a, 2b, 2c, 2d) est tourné dans la direction du glissement du plateau de chargement (2), au moins deux parties (2a, 2b ; 2c, 2d) du plateau de chargement (2) pouvant être rabattues dans l'état rabattu l'une vers l'autre, dans une position orientée verticalement.

2. Plateau de chargement extensible selon la revendication 1, **caractérisé en ce qu'**au moins deux parties (2a, 2b ; 2c, 2d) du plateau de chargement (2) sont connectées par une charnière (21).

3. Plateau de chargement extensible selon la revendication 1 ou 2, **caractérisé en ce que** des moyens de verrou (23) sont disposés sur au moins une partie (2b) du plateau de chargement (2), et permettent de verrouiller deux parties (2b, 2c) du plateau de chargement (2) dans une position définie de coopération.

4. Plateau de chargement extensible selon la revendication 3, **caractérisé en ce que** les moyens de verrou (23) se composent d'une goupille montée mobile dans une partie (2b) du plateau de chargement (2) qui peut pénétrer dans un alésage correspondant dans une autre partie (2c) du plateau de chargement (2).

5. Plateau de chargement extensible selon la revendication 4, **caractérisé en ce que** la goupille est montée mobile dans une direction transversale à la direction de glissement du plateau de chargement (2).

6. Plateau de chargement extensible selon l'une quelconque des revendications 1 à 5, **caractérisé en ce que** le plateau de chargement (2) se compose de quatre parties (2a, 2b, 2c, 2d) dont à chaque fois deux parties (2a, 2b ; 2c, 2d) sont connectées par une charnière (21).

7. Plateau de chargement extensible selon l'une quelconque des revendications 1 à 6, **caractérisé en ce que** des moyens d'encliquetage sont prévus, lesquels maintiennent les parties (2a, 2b ; 2c, 2d) du plateau de chargement (2) dans l'état rabattu l'une vers l'autre dans la position orientée verticalement.

8. Plateau de chargement extensible selon l'une quelconque des revendications 1 à 7, **caractérisé en ce que** le plateau de chargement (2) est pourvu de moyens (4) avec lesquels il peut être fixé de manière immobile par rapport à l'espace de chargement ou au coffre (1).

9. Plateau de chargement extensible selon la revendication 8, **caractérisé en ce que** les moyens (4) présentent un élément fonctionnel (5) qui peut produire entre l'espace de chargement ou le coffre (1) et le plateau de chargement (2) une connexion par force, par friction ou par engagement positif.

10. Plateau de chargement extensible selon la revendication 8 ou 9, **caractérisé en ce que** l'élément fonctionnel (5) est réalisé sous forme de bras (5) disposé sur ou dans le plateau de chargement (2) et monté de manière articulée autour d'un axe de rotation (6) disposé sur ou dans le plateau de chargement (2).

11. Plateau de chargement extensible selon la revendication 10, **caractérisé en ce que** le bras (5) présente à l'une de ses extrémités (7) une portion (8) qui peut coopérer par engagement par force, friction ou par engagement positif avec une portion conjuguée (9) disposée fixement sur l'espace de chargement ou le coffre (1).

12. Plateau de chargement extensible selon la revendication 11, **caractérisé en ce que** la portion (8) du bras (5) forme une surface de friction qui peut s'appliquer par friction contre la portion conjuguée (9).

13. Plateau de chargement extensible selon la revendication 11, **caractérisé en ce que** la portion (8) du bras (5) forme une saillie qui peut venir en prise par engagement positif dans un ou plusieurs évidements (10) dans la portion conjuguée (9).

14. Plateau de chargement extensible selon la revendication 13, **caractérisé en ce que** la saillie (8) du bras (5) est réalisée sous forme de dent et les évidements (10) sont réalisés dans la portion conjuguée (9) sous forme de crémaillère.

15. Plateau de chargement extensible selon l'une quelconque des revendications 10 à 14, **caractérisé en ce que** les moyens (4) à l'autre extrémité (11) du bras (5) comprennent un élément de levage (12) avec lequel l'extrémité (11) peut être déplacée dans une direction perpendiculaire à la direction de glissement du plateau de chargement (2), de préférence dans la direction de la verticale (V).

16. Plateau de chargement extensible selon la revendication 15, **caractérisé en ce que** l'élément de levage (12) comprend un coulisseau (13) qui est disposé de manière à pouvoir coulisser par rapport au plateau de chargement (2), en particulier dans la direction de glissement du plateau de chargement (2), et qui présente une surface d'actionnement (14), qui peut déplacer l'autre extrémité (11) du bras (5) dans une direction perpendiculaire à la direction de glissement du plateau de chargement (2), de préférence dans la direction de la verticale (V).

17. Plateau de chargement extensible selon la revendication 16, **caractérisé en ce que** la surface d'actionnement (14) du coulisseau (13) est réalisée sous forme de surface de clavette, qui peut coopérer avec une surface de clavette conjuguée (15) de forme complémentaire à l'autre extrémité (11) du bras (5).

18. Plateau de chargement extensible selon la revendication 16 ou 17, **caractérisé en ce que** le coulisseau (13) est précontraint au moyen d'un élément de ressort (16) dans une direction, notamment dans la direction de glissement du plateau de chargement (2).

19. Plateau de chargement extensible selon la revendication 18, **caractérisé en ce que** l'élément de ressort (16) est un ressort spiral, qui est disposé concentriquement autour d'une barre (17), la barre (17) étant fixée dans le plateau de chargement (2) de telle sorte que son axe soit tourné dans la direction de coulissement du coulisseau (13) dans le plateau de chargement (2).

20. Plateau de chargement extensible selon la revendication 18 ou 19, **caractérisé en ce que** l'élément de ressort (16) précontraint les moyens (4) de telle sorte que le plateau de chargement (2) soit fixé par rapport à l'espace de chargement ou au coffre (1).

21. Plateau de chargement extensible selon l'une quelconque des revendications 16 à 20, **caractérisé en ce que** l'on dispose sur le coulisseau (13) une manette ou un bouton poussoir (18).

22. Plateau de chargement extensible selon l'une quelconque des revendications 15 à 21, **caractérisé en ce que** l'on dispose sur l'élément de levage (12), en particulier sur le coulisseau (13), au moins un élément de transfert (17) avec sa première extrémité, qui traverse le plateau de chargement (2) et qui porte à son autre extrémité une barrette de butée (19).

23. Plateau de chargement extensible selon la revendication 22, **caractérisé en ce que** l'élément de transfert (17) est la barre qui sert au guidage concentrique du ressort spiral (16).

24. Plateau de chargement extensible selon la revendication 22 ou 23, **caractérisé en ce que** la barrette de butée (19) est réalisée en forme de poutre, et s'étend avec son axe longitudinal transversalement à la direction de glissement du plateau de chargement (2) dans un plan horizontal sur l'extrémité arrière et/ou avant du plateau de chargement (2), vu dans la direction de glissement du plateau de chargement (2).

25. Plateau de chargement extensible selon l'une quelconque des revendications 22 à 24, **caractérisé en ce que** la barrette de butée (19) s'étend essentiellement sur toute la largeur du plateau de chargement (2).

26. Plateau de chargement extensible selon l'une quelconque des revendications 1 à 25, **caractérisé en ce que** le palier linéaire (3) présente deux rails de guidage entre lesquels des corps de roulement, notamment des billes, sont disposés, lesquels sont guidés par une cage qui s'étend dans la direction de glissement du plateau de chargement (2) sur une longueur définie.
